# EUROPEAN PATENT SPECIFICATION

(11) **EP 2 887 197 B1**
(45) Date of publication and mention of the grant of the patent: **11.07.2018**
(21) Application number: 14307023.3
(22) Date of filing: 12.12.2014
(51) Int. Cl.: G06F 3/0482, G06F 3/0484

(54) **Method for selecting an electronic content to be displayed on a display of an electronic device**
Verfahren zur Auswahl eines elektronischen Inhalts zur Darstellung auf einer Anzeige einer elektronischen Vorrichtung
Procédé de sélection d'un contenu électronique devant être affiché sur un écran d'un dispositif électronique

(30) Priority: 20.12.2013 WO PCT/CN2013/090064
(43) Date of publication of application: 24.06.2015
(73) Proprietor: Orange, 75015 Paris (FR)
(72) Inventor: Huang, Menghuai, 100013 Beijing (CN)
(74) Representative: Fontenelle, Sandrine

(56) References cited:
- EP-A2- 1 488 299
- EP-A2- 1 990 711
- EP-A2- 2 302 497
- US-A1- 2011 141 146
- US-A1- 2013 268 877

## Description

The present invention generally relates to methods for displaying electronic contents on electronic devices.

Browsers have been developed for mobile devices, such as Smartphones or tablets, such as Mobile Chrome™. Such browsers allow the display of multiple electronic contents such as WebPages multiples windows.

In known browsers, in order to display different electronic contents, a user select the link pointing toward the electronic content they wish to access, e.g. an URL pointing toward a press article. However, due to the small size of the screens of electronic devices, selecting a link pointing toward a given electronic content can be tricky and the user can easily select a link pointing toward another electronic content resulting in a wrong electronic content to be displayed on the screen of the electronic device of the user.

In order to overcome such drawbacks, some browsers propose to display a dialog box containing zoomed in links. When two links are very close to each other and the electronic device cannot determine with certainty which one of the two links the user want to activate, then a dialog box containing an enlargement of the two links is displayed. The user of the electronic device then selects the desired link for example by touching it.

Such a method although being efficient in selecting the desired link, is not user friendly since the user must repeatedly select a link by touching it in different dialog boxes, until there is no more ambiguity on the link they want to activate.

Document EP1990711A2 discloses a method to preview different user interfaces accessible through tab elements displayed on a first interface on an electronic device.

It is an objective of the present invention to overcome disadvantages and/or make improvements in the prior art.

The invention is as set out in the independent method, device and computer program claims.

This method allows a user of an electronic device to select at least one link, such as a hyperlink, pointing towards electronic contents to be displayed on a display of their electronic device among a plurality of links touched by the user of the electronic device.

Indeed, since the size of a specific element of the user interface of the electronic device corresponding to a hyperlink is small comparing to the size of a portion of the user interface of the electronic device touched by a finger of the user of the electronic device, more than one hyperlink can be activated by the user, making the selection of the electronic content to be displayed quite tricky.

In order to select the right electronic content to be displayed on the display of the electronic device, the method of the invention consists, while a first electronic content is already displayed on the display of the electronic device in displaying a portion of the second electronic contents, towards which the activated hyperlinks are pointing, on the display of the electronic device, said portions of the second electronic contents overlapping the first electronic content already displayed. Thus, the user of the electronic device can see on the display of their electronic device the first electronic content overlapped by the stored electronic contents and hence can see a part of the electronic contents.

Thus, the second electronic content moves into the display of the electronic device from, for example, an edge of the display of the electronic device, the surface of the second electronic content overlapping the first electronic content being proportional to the distance between the starting position and the ending position of the second input on the user interface of the electronic device.

When the second input is a sliding gesture or a pinch gesture, the surface of the second electronic content overlapping the first electronic content is proportional to the length of the sliding gesture; i.e. the longer the sliding gesture the bigger the surface overlapping the first electronic content.

The user of the electronic device then touch a third specific element of the user interface of their electronic device in order to select which one of the stored electronic contents is to be displayed on the display of the electronic device instead of the first electronic content.

Such a method improves the quality of experience of the user because they can select the electronic content to be displayed on the display of their electronic device without the user having to make many tap gestures to select the right electronic content. Furthermore, the user being capable of seeing a part of the second electronic content before selecting it, they select the electronic content to be displayed based on what they see of the electronic content and not based only on a hyperlink which is not representative of the electronic content.

The electronic device of the user can be for example a mobile phone, a Smartphone, a tablet, a laptop, an e-reader, etc.

The electronic device of the user comprises a display, and a user interface, such as a keyboard, or a keyboard and pointing means such as a mouse. In some embodiments of the invention, the display and the user interface can be one and the same, it is the case for example of touch-screens.

Thus, a specific element of the user interface can be a key of a key board, a combination of keys, a button of the pointing means, a specific area of a touch-screen, etc.

An input can be a keystroke or a combination of keystrokes, a combination of keystroke and an action of the pointing means, e.g. highlighting a link currently displayed using the pointing means and striking a key of the keyboard.

In the case of touch-screens, an input can be a specific gesture on a specific area of the screen, such as a clutch gesture or a pinch gesture, etc.

According to a feature of the method of the invention, the third specific element is a given area of the portion of the second electronic content overlapping the first electronic content.

Thus the user of the electronic device only have to touch an area of the portion of the second electronic content for the second electronic content to be displayed in instead of the first electronic content. Such a solution requires minimal user intervention to select an electronic content to be displayed.

The method of the invention further comprises the steps of :
- Determining whether the ending position of the second input on the third specific element of the user interface is beyond a threshold,
- If so, the third input being a release of the second input, triggering the display of the second electronic content on the display of the electronic device.

If the sliding gesture is longer than a threshold, then the second electronic content is considered selected by the user of the electronic device, hence the second electronic content is displayed on the display of the electronic device instead of the first electronic content.

The electronic device of the user can be for example a mobile phone, a Smartphone, a tablet, a laptop, an e-reader, etc.

The electronic device of the user comprises a display, and a user interface, such as a keyboard, or a keyboard and pointing means such as a mouse. In some embodiments of the invention, the display and the user interface can be one and the same, it is the case for example of touch-screens.

The information medium may be any entity or device capable of storing the programs. For example, the medium can comprise a storage means, such as a ROM, for example a CD ROM or a microelectronic circuit ROM, or else a magnetic recording means, for example a diskette (floppy disk) or a hard disk.

Moreover, the information medium may be a transmissible medium such as an electrical or optical signal, which may be conveyed via an electrical or optical cable, by radio or by other means. The program according to the invention may in particular be downloaded from a network of Internet type.

The present system and method are explained in further detail, and by way of example, with reference to the accompanying drawings wherein:
**FIG. 1** represents an electronic device capable of running the method for selecting an electronic content to be displayed object of the invention,
**FIG. 2** represents a diagram representing the steps of the method of the invention as experienced by the user,
**FIG. 3** represents the electronic device while running the method for selecting an electronic content to be displayed object of the invention,
**FIG. 4** represents a diagram representing the steps of the method of the invention when it is run by the electronic device,
**FIG. 5** represents an electronic device capable of running the method of the invention.

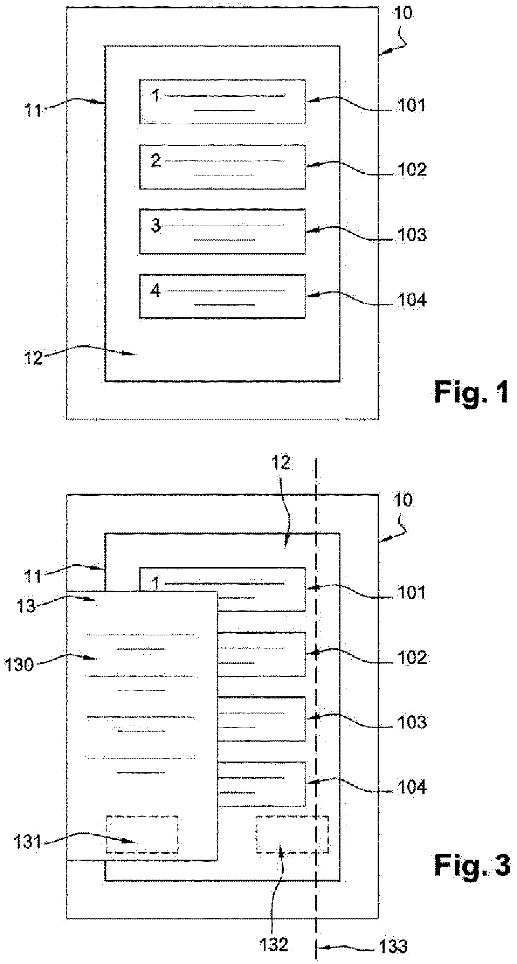

**Figure 1** represents an electronic device 10 comprising a graphical user interface 11, e.g. a touch-screen, acting both as a display and a user interface controlling the display.

The electronic device 10 is capable of launching a browser or an application, such as for example a news application.

When the browser is running, the electronic device 10 displays a first electronic content 12, e.g. a webpage, displaying for example hyperlinks 1-4 corresponding to the results of a search executed by a search engine. The hyperlinks 1-4 can be, for example, URL pointing toward different electronic contents such as press articles, videos, pictures, WebPages, etc.

The surface of the graphical user interface 11 comprises four specific elements 101-104 of the graphical user interface 11, each of which corresponds to a hyperlink 1-4.

In other embodiments of the invention, the electronic device 10 comprises a display and a user interface distinct from each other. The user interface 11 can be a keyboard, or a keyboard and pointing means such as a mouse. Thus, a specific element of the user interface 11 can be a key of a key board, a combination of keys, a button of the pointing means, a specific area of a touch-screen, etc.

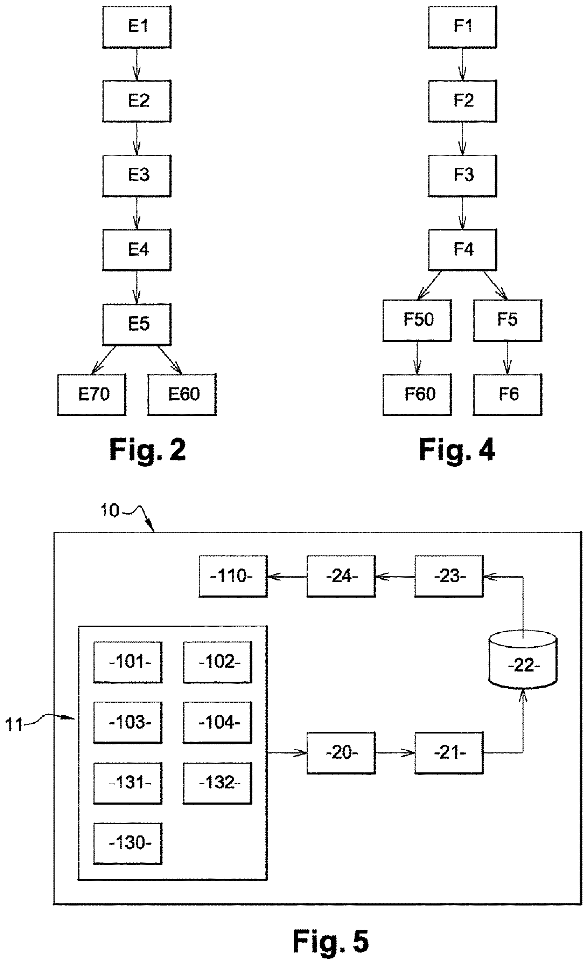

**Figure 2** shows a diagram representing the steps of the method of the invention as experienced by the user.

In a step E1, a first electronic document 12 is displayed on the graphical user interface 11. Such a document is for example a webpage comprising a plurality of hyperlinks pointing toward other electronic contents such as videos, pictures, other WebPages, etc.

The user of the electronic device 10 whishes to access at least one of the electronic contents associated to the hyperlinks displayed on the graphical user interface 11.

In a step E2, the user touches a first specific element 102 corresponding to the hyperlink 2 of the graphical user interface 11 for the user wants to access to the electronic content toward which the hyperlink 2 is pointing.

In an embodiment of the method according to the invention, when the user has selected the electronic content to be displayed by touching the specific element 102 of the graphical user interface 11 corresponding to the hyperlink 102, the selected electronic content 13 is downloaded and stored in a memory of the electronic device 10 during a step E3.

In another embodiment of the method according to the invention, when the user has selected the electronic content to be displayed by touching the specific element 102 of the graphical user interface 11 corresponding to the hyperlink 102, the selected electronic content 13 is displayed in streaming mode on the electronic device 10, i.e. the information intended to be rendered on the electronic device 10 are transmitted, for example, from a server, but not stored in the electronic device 10.

A portion of the selected electronic content 13 is then displayed on the graphical user interface 11 during a step E4. The displayed portion of the selected electronic content 13 is overlapping the first electronic content 12 already displayed on the graphical user interface 11. Thus the user sees simultaneously both the first electronic content 12 and a portion of the selected electronic 13 content on the graphical user interface 11 as shown in **figure 3****.**

The user of the electronic device 10 may modify, during a step E5, the measurement of the portion of the second electronic content 13 overlapping the first electronic content 12 in order to see a greater or a smaller portion of the second electronic content 13. The measurement of the portion of the second electronic content 13 to be displayed is proportional to the length of a sliding gesture or a pinch gesture executed by the user on the graphical user interface 11, the longer the sliding gesture the bigger the surface of the second electronic content 13 overlapping the first electronic content 12.

In a first embodiment of the method of the invention, in order to trigger the display of the whole electronic content 13 on the graphical user interface 11, the user touches a specific element 130 corresponding to an area of the graphical user interface where the portion of the second electronic content 13 is displayed, during a step E60.

Thus the user of the electronic device 10 only have to touch an area of the portion of the second electronic content 13 for the second electronic content 13 to be displayed on the graphical user interface 11 in instead of the first electronic content 12.

In a second embodiment of the method of the invention, if the sliding gesture is longer than a threshold, then the second electronic content 13 is considered selected by the user of the electronic device 10 and displayed on the graphical user interface 11 instead of the first electronic content 12 during a step E70.

**Figure 4** shows a diagram representing the steps of the method of the invention when it is run by the electronic device 10.

An electronic content 12 is displayed on the graphical user interface 11 of the electronic device 10. Such an electronic content 12 is for example a webpage displaying the result of a search executed by a search engine or the home page of an application such as a news application.

In a step F1, a first input on the specific element 102 of the graphical user interface 11 is detected by detecting means of the electronic device 10. The specific element 102 corresponds to the hyperlink 2 pointing toward the second electronic content 13.

An input can be a keystroke or a combination of keystrokes, a combination of keystroke and an action of the pointing means, e.g. highlighting a link currently displayed using the pointing means and striking a key of the keyboard.

In the case of touch-screens, an input can be a specific gesture on a specific area of the screen, such as a clutch gesture or a pinch gesture, etc.

In a step F2, the electronic content 13, toward which the hyperlink 2 associated to the specific element 102 for which an input is detected is pointing, is downloaded and stored in storing means.

Such storing means can be embedded in the electronic device 10 or in a remote device, such as a dedicated server, communicating with the electronic device 10 through a communication network.

In a step F3, a portion of the second electronic content 13 is displayed on the graphical user interface 11, said portion of the second electronic content 13 overlapping the first electronic content 12 as shown on **figure 3****.**

In a step F4, a measurement of the portion of the second electronic content 13 overlapping the first electronic content 12 to be displayed is determined. The measurement of the portion of the second electronic content 13 to be displayed is proportional to an offset between a starting position of a third input on a third specific element 131 of the graphical user interface 11 and an ending position of the third input on a fourth specific element 132 of the graphical user interface 11 of the electronic device 10.

Thus, the second electronic content 13 moves from an edge of the graphical user interface 11 to the center of the graphical user interface 11, the surface of the second electronic content 13 overlapping the first electronic content 12 being proportional to the distance between the starting position of the third input on the third specific element 131 of the graphical user interface 11 and the ending position of the third input on the fourth specific element 132 of the graphical user interface 11.

When the third input is for example a sliding gesture, the surface of the second electronic content 13 overlapping the first electronic content 12 is proportional to the length of the sliding gesture; i.e. the longer the sliding gesture the bigger the surface overlapping the first electronic content.

In a step F5, the electronic device 10 determines if the ending position of the third input on the fourth specific element 132 of the graphical user interface 11 is beyond a threshold 133, as shown in **figure 3****.**

If it the case, the display of the second electronic content 13 on the graphical user interface 11 of the electronic device 10 is triggered in a step F6. Thus, when step F6 is completed, the only electronic content displayed on the graphical user interface 11 is the second electronic content 13, for the first electronic content 12 is totally covered by the second electronic content 13.

In another embodiment of the invention, in a step F50, a second input on the specific element 131 of the graphical user interface 11 is detected. The detection of second input on the specific element 131 triggers, in a step F60, the display of the second electronic content 13 on the graphical user interface 11 of the electronic device 10.

In such an embodiment of the method of the invention, the user of the electronic device 10 only have to touch a specific element 131 of the portion of the second electronic content 13 already displayed for the second electronic content 13 to be displayed in instead of the first electronic content 12 on the graphical user interface 11.

**Figure 5** represents an electronic device 10 capable of executing the method for selecting an electronic content to be displayed objet of the invention.

Such an electronic device 10 comprises a display 110 controlled by a user interface 11. The user interface 11 can be for example a keyboard, or a keyboard and pointing means such as a mouse. In some embodiments of the electronic device 10, the display 110 and the user interface 11 can be one and the same, it is the case for example of touch-screens.

The user interface 11 comprises a plurality of specific elements 101-104 and 131-132, each of them being involved in triggering the execution of a specific function by the electronic device 10 when activated by a user of the electronic device 10.

A specific element of the user interface 11 can be a key of a key board, a combination of keys, a button of the pointing means, a specific area of a touch-screen, etc. Connected to the user interface 11, the electronic device comprises means 20 for detecting an input on one of the specific elements 101-104 and 131-132 of the user interface 11.

An input can be a keystroke or a combination of keystrokes, a combination of keystroke and an action of the pointing means, e.g. highlighting a link currently displayed using the pointing means and striking a key of the keyboard.

In the case of touch-screens, an input can be a specific gesture on a specific area of the screen, such as a clutch gesture or a pinch gesture, etc.

The detecting means 20 are connected to means 21 for downloading electronic contents selected using the specific elements 101-104 of the user interface 11.

The downloading means 21 are connected to storing means 22 in which the selected electronic contents are stored after being downloaded.

The storing means 22 are connected to means 23 for measuring the portion of the second electronic content 13 overlapping the first electronic content 12 to be displayed. The measurement of the portion of the second electronic content 13 to be displayed is proportional to an offset between a starting position of a third input on a third specific element 131 of the graphical user interface 11 and an ending position of the third input on a fourth specific element 132 of the graphical user interface 11 of the electronic device 10.

The means 23 for measuring the portion of the electronic content 12 to be displayed are connected to means 24 for determining if the ending position of the third input on the fourth specific element 132 of the graphical user interface 11 is beyond a threshold 133. The means 24 for determining if the ending position of the third input on the fourth specific element 132 of the graphical user interface 11 is beyond a threshold 133 are connected to the display 110.

## Claims

1. A method for selecting an electronic content to be displayed on a display of an electronic device controlled by means of a user interface, a first electronic content already being displayed on the display of the electronic device and comprising a plurality of hyperlinks pointing towards other electronic contents, said method comprising the steps of :
- Detecting a first input on a first hyperlink of the first electronic content on the user interface, to select a second electronic content,
- Downloading the selected second electronic content, and then
- Displaying a portion of the second electronic content on the display of the electronic device, said portion of the second electronic content overlapping the first electronic content, a measurement of the portion of the second electronic content to be displayed being proportional to the length of a second input on the user interface of the electronic device, the second input being a sliding gesture or a pinch gesture,
- Triggering the display of the second electronic content instead of the first electronic content on the display of the electronic device when the ending position of the second input on the user interface is determined to be beyond a threshold.

2. The method of claim 1, wherein the specific element is a given area of the portion of the second electronic content overlapping the first electronic content.

3. An electronic device controlled by means of a user interface and operable to select an electronic content to be displayed on a display of the electronic device on which a first electronic content already is displayed, the first electronic document comprising a plurality of hyperlinks pointing towards other electronic contents, the electronic device comprising means for:
- Detecting a first input on a first hyperlink of the first electronic content on the user interface, to select a second electronic content,
- Downloading the selected second electronic content, and then
- Displaying a portion of the second electronic content on the display, said portion of the second electronic content overlapping the first electronic content, a measurement of the portion of the second electronic content to be displayed being proportional to the length of a second input on the user interface of the electronic device, the second input being a sliding gesture or a pinch gesture,
- Triggering the display of the second electronic content instead of the first electronic content on the display of the electronic device when the ending position of the second input on the user interface is determined to be beyond a threshold.

4. Computer program **characterized in that** it comprises program code instructions for the implementation of the steps of the method for selecting an electronic content to be displayed as claimed in claim 1 when the program is executed by a processor.

## Patentansprüche

1. Verfahren zum Auswählen eines elektronischen Inhalts, der auf einer Anzeige einer mittels einer Nutzerschnittstelle gesteuerten elektronischen Einrichtung angezeigt werden soll, wobei auf der Anzeige der elektronischen Einrichtung bereits ein erster elektronischer Inhalt angezeigt wird und eine Vielzahl von auf weitere elektronische Inhalte verweisenden Hyperlinks umfasst, wobei das Verfahren die folgenden Schritte umfasst:
- Erfassen einer ersten Eingabe an einem ersten Hyperlink des ersten elektronischen Inhalts auf der Nutzerschnittstelle, um einen zweiten elektronischen Inhalt auszuwählen,
- Herunterladen des ausgewählten zweiten elektronischen Inhalts und hierauf
- Anzeigen eines Teils des zweiten elektronischen Inhalts auf der Anzeige der elektronischen Einrichtung, wobei der Teil des zweiten elektronischen Inhalts den ersten elektronischen Inhalt überlagert, wobei eine Abmessung des Teils des anzuzeigenden zweiten elektronischen Inhalts proportional zur Länge einer zweiten Eingabe auf der Nutzerschnittstelle der elektronischen Einrichtung ist, wobei es sich bei der zweiten Eingabe um eine Wischgeste oder eine Auf-/Zuziehgeste handelt,
- Auslösen der Anzeige des zweiten elektronischen Inhalts anstatt des ersten elektronischen Inhalts auf der Anzeige der elektronischen Einrichtung, wenn bestimmt wird, dass die Endposition der zweiten Eingabe auf der Nutzerschnittstelle jenseits einer Grenze liegt.

2. Verfahren nach Anspruch 1, wobei es sich bei dem spezifischen Element um einen bestimmten Bereich des den ersten elektronischen Inhalt überlagernden Teils des zweiten elektronischen Inhalts handelt.

3. Elektronische Einrichtung, die mittels einer Nutzerschnittstelle gesteuert wird und bedienbar ist, um einen elektronischen Inhalt auszuwählen, der auf einer Anzeige der elektronischen Einrichtung angezeigt werden soll, auf der bereits ein erster elektronischer Inhalt angezeigt wird, wobei das erste elektronische Dokument eine Vielzahl von auf weitere elektronische Inhalte verweisenden Hyperlinks umfasst, wobei die elektronische Einrichtung Mittel umfasst zum:
- Erfassen einer ersten Eingabe an einem ersten Hyperlink des ersten elektronischen Inhalts auf der Nutzerschnittstelle, um einen zweiten elektronischen Inhalt auszuwählen,
- Herunterladen des ausgewählten zweiten elektronischen Inhalts und hierauf
- Anzeigen eines Teils des zweiten elektronischen Inhalts auf der Anzeige, wobei der Teil des zweiten elektronischen Inhalts den ersten elektronischen Inhalt überlagert, wobei eine Abmessung des Teils des anzuzeigenden zweiten elektronischen Inhalts proportional zur Länge einer zweiten Eingabe auf der Nutzerschnittstelle der elektronischen Einrichtung ist, wobei es sich bei der zweiten Eingabe um eine Wischgeste oder eine Auf-/Zuziehgeste handelt,
- Auslösen der Anzeige des zweiten elektronischen Inhalts anstatt des ersten elektronischen Inhalts auf der Anzeige der elektronischen Einrichtung, wenn bestimmt wird, dass die Endposition der zweiten Eingabe auf der Nutzerschnittstelle jenseits einer Grenze liegt.

4. Computerprogramm, **dadurch gekennzeichnet, dass** es Programmcodeanweisungen zur Umsetzung der Schritte des Verfahrens nach Anspruch 1 zum Auswählen eines anzuzeigenden elektronischen Inhalts bei Ausführung des Programms durch einen Prozessor umfasst.

## Revendications

1. Procédé pour sélectionner un contenu électronique qui doit être affiché sur un dispositif d'affichage d'un dispositif électronique commandé au moyen d'une interface utilisateur, un premier contenu électronique étant déjà affiché sur le dispositif d'affichage du dispositif électronique et comprenant une pluralité d'hyperliens pointant vers d'autres contenus électroniques, ledit procédé comprenant les étapes de :
- détecter une première entrée sur un premier hyperlien du premier contenu électronique sur l'interface utilisateur, pour sélectionner un second contenu électronique ;
- télécharger le second contenu électronique sélectionné, et ensuite
- afficher une partie du second contenu électronique sur le dispositif d'affichage du dispositif électronique, ladite partie du second contenu électronique chevauchant le premier contenu électronique, une mesure de la partie du second contenu électronique à afficher étant proportionnelle à la longueur d'une seconde entrée sur l'interface utilisateur du dispositif électronique, la seconde entrée étant un geste de glissement ou un geste de pincement,
- déclencher l'affichage du second contenu électronique au lieu du premier contenu électronique sur le dispositif d'affichage du dispositif électronique lorsqu'il est déterminé que la position de fin de la seconde entrée sur l'interface utilisateur est au-delà d'un seuil.

2. Procédé selon la revendication 1, dans lequel l'élément spécifique est une zone donnée de la partie du second contenu électronique chevauchant le premier contenu électronique.

3. Dispositif électronique commandé au moyen d'une interface utilisateur et pouvant être mis en oeuvre pour sélectionner un contenu électronique à afficher sur un dispositif d'affichage du dispositif électronique sur lequel un premier contenu électronique est déjà affiché, le premier document électronique comprenant une pluralité d'hyperliens pointant vers d'autres contenus électroniques, le dispositif électronique comprenant des moyens pour :
- détecter une première entrée sur un premier hyperlien du premier contenu électronique sur l'interface utilisateur pour sélectionner un second contenu électronique ;
- télécharger le second contenu électronique sélectionné et ensuite
- afficher une partie du second contenu électronique sur le dispositif d'affichage, ladite partie du second contenu électronique chevauchant le premier contenu électronique, une mesure de la partie du second contenu électronique à afficher étant proportionnelle à la longueur d'une seconde entrée sur l'interface utilisateur du dispositif électronique, la seconde entrée étant un geste de glissement ou un geste de pincement,
- déclencher l'affichage du second contenu électronique au lieu du premier contenu électronique sur le dispositif d'affichage du dispositif électronique lorsqu'il est déterminé que la position de fin de la seconde entrée sur l'interface utilisateur est au-delà d'un seuil.

4. Programme d'ordinateur **caractérisé en ce qu'**il comprend des instructions de code de programme pour la mise en oeuvre des étapes du procédé pour sélectionner un contenu électronique à afficher selon la revendication 1 lorsque le programme est exécuté par un processeur.
